Europäisches Patentamt

European Patent Office

Office européen des brevets

(11) Numéro de publication : **0 447 294 A1**

## (12) DEMANDE DE BREVET EUROPEEN

(21) Numéro de dépôt : **91400599.6**

(22) Date de dépôt : **05.03.91**

(51) Int. Cl.⁵ : **F16F 1/36, F16L 55/033, F01N 7/18**

(30) Priorité : **15.03.90 FR 9003333**

(43) Date de publication de la demande :
**18.09.91 Bulletin 91/38**

(84) Etats contractants désignés :
**DE ES GB IT NL SE**

(71) Demandeur : **Société JACQUES DUBOIS**
**82 rue A. Badin**
**F-76360 Barentin (FR)**

(72) Inventeur : **Brandener, Louis**
**80 avenue F. Lefebvre**
**F-78300 Poissy (FR)**

(74) Mandataire : **Fruchard, Guy et al**
**CABINET BOETTCHER 23, rue la Boétie**
**F-75008 Paris (FR)**

(54) Manchon élastique anti-vibratoire notamment pour accouplement d'échappement et procédé de réalisation d'un manchon élastique anti-vibratoire.

(57)    Le manchon élastique anti-vibratoire selon l'invention comporte une masse de fil d'acier comprimé (8) entourée d'une bande de maintien (2) en fil métallique enroulée en hélice autour de la masse de fil d'acier comprimé (8) et dont les extrémités sont fixées à la masse de fil d'acier comprimé.

FIG_3

EP 0 447 294 A1

# MANCHON ELASTIQUE ANTI-VIBRATOIRE NOTAMMENT POUR ACCOUPLEMENT D'ECHAPPEMENT ET PROCEDE DE REALISATION D'UN MANCHON ELASTIQUE ANTI-VIBRATOIRE

La présente invention concerne un manchon élastique anti-vibratoire et un procédé de fabrication d'un tel manchon.

On connaît des manchons élastiques anti-vibratoires qui sont utilisés en particulier dans les accouplements flexibles de tubes d'échappement et qui sont réalisés à partir d'une bande de tricot de fil d'acier enroulée pour former une préforme cylindrique puis comprimée axialement pour obtenir le manchon élastique anti-vibratoire prêt à être monté. La réalisation d'un tel manchon présente un problème de cohésion tant lors de la réalisation de la préforme,où il est nécessaire de maintenir la bande de tricot de fil d'acier enroulée sur elle-même avant son introduction dans le moule en vue d'une compression axiale, que lors de l'utilisation où le manchon élastique est soumis à des forces de compression axiales complémentaires qui ont tendance à déformer le manchon pour lui faire prendre la forme d'un tonneau et qui risque de provoquer un déroulement du tricot du fil d'acier malgré l'enchevêtrement des mailles résultant de la compression axiale de la préforme initiale.

Pour faire face à ce problème, on a réalisé des manchons élastiques dans lesquels la préforme cylindrique de tricot de fil d'acier est maintenue enroulée soit par un aiguillettage de l'extrémité de la bande de tricot de fil d'acier, soit par un agrafage de l'extrémité de la bande de tricot de fil d'acier, soit encore par une mise en place d'anneaux de sertissage, par exemple des anneaux en cuivre. Ces solutions présentent toutes des inconvénients soit au niveau du coût de réalisation industrielle, soit par perte d'une partie des performances du manchon en particulier son élasticité selon une direction longitudinale. On a également envisagé d'envelopper la préforme cylindrique dans un feuillard métallique très mince, toutefois cette solution n'est pas satisfaisante car après compression axiale le feuillard métallique, même très mince, diminue de façon trop importante les propriétés élastiques du manchon.

Un but de la présente invention est de proposer un manchon élastique anti-vibratoire qui puisse être réalisé industriellement dans des conditions satisfaisantes et présente une bonne cohésion tant pendant sa réalisation que lors de son utilisation.

En vue de la réalisation de ce but, on prévoit selon l'invention un manchon élastique anti-vibratoire comportant une masse de fil d'acier comprimé et une bande de maintien en fil métallique enroulée en hélice autour de la masse de fil d'acier comprimée et dont les extrémités sont fixées à la masse de fil d'acier comprimé .

Ainsi, l'enroulement de la bande de maintien autour de la masse de fil d'acier comprimé assure une cohésion de cette masse, et la forme en hélice de cet enroulement minimise les modifications de caractéristiques d'élasticité du manchon.

Selon une version avantageuse de l'invention, la bande de maintien est une bande de tricot de fil d'acier, de préférence une portion de tricot tubulaire aplatie. On a expérimenté que ce mode de réalisation était particulièrement peu coûteux à réaliser et que la bande de maintien ainsi obtenue présentait d'excellentes propriétés tant du point de vue de la traction devant être exercée sur la bande de maintien selon une direction longitudinale de celle-ci pour maintenir la cohésion du manchon élastique que du point de vue de la souplesse de déformation selon une direction transversale à la direction longitudinale de la bande afin de garder une élasticité axiale du manchon élastique.

Selon un autre aspect de l'invention, celle-ci concerne un procédé de réalisation d'un manchon élastique anti-vibratoire comportant les étapes d'enrouler une bande de tricot de fil d'acier pour former une préforme cylindrique, et de comprimer axialement la préforme cylindrique pour former une masse de fil d'acier comprimée, dans lequel on prévoit en outre l'étape d'enrouler en hélice autour de la préforme cylindrique une bande de maintien en fil métallique, et de fixer les extrémités de la bande de maintien à la préforme cylindrique.

De préférence, le procédé selon l'invention est mis en oeuvre en déposant une extrémité de la bande de maintien sur la bande de tricot de fil d'acier avant enroulement de celle-ci, et en effectuant un enroulement simultané de la bande de maintien et de la bande de tricot de fil d'acier de façon que la bande de maintien soit tournée du côté intérieur des tours de la bande de tricot de fil d'acier auxquels elle est associée, puis effectuer l'enroulement en hélice de la bande de maintien autour de la préforme et finalement poinçonner radialement les extrémités libres de la bande de maintien dans la préforme cylindrique.

D'autres caractéristiques et avantages de l'invention apparaîtront encore à la lumière de la description qui suit d'un mode de réalisation particulier non limitatif de l'invention en liaison avec la mise en oeuvre d'un procédé particulier selon l'invention, en référence aux dessins ci-joints parmi lesquels :

    – la figure 1 est une vue en perspective d'une bande de tricot de fil d'acier et d'une bande de maintien associée avant enroulement de la préforme,

    – la figure 2 est une vue en perspective de la préforme après enroulement de la bande de maintien et avant fixation de la seconde extrémité de la bande de maintien,

- la figure 3 est une vue en perspective du manchon élastique obtenu selon l'invention après compression axiale.

En référence aux dessins, le manchon élastique anti-vibratoire selon l'invention est réalisé à partir d'une bande de tricot de fil d'acier 1. La bande de tricot de fil d'acier est par exemple obtenue par aplatissement d'un tricot tubulaire réalisé à partir d'un fil d'acier de 0,2 mm de diamètre ayant une tenacité de 180 kg/mm$^2$, sur un métier à tricoter circulaire.

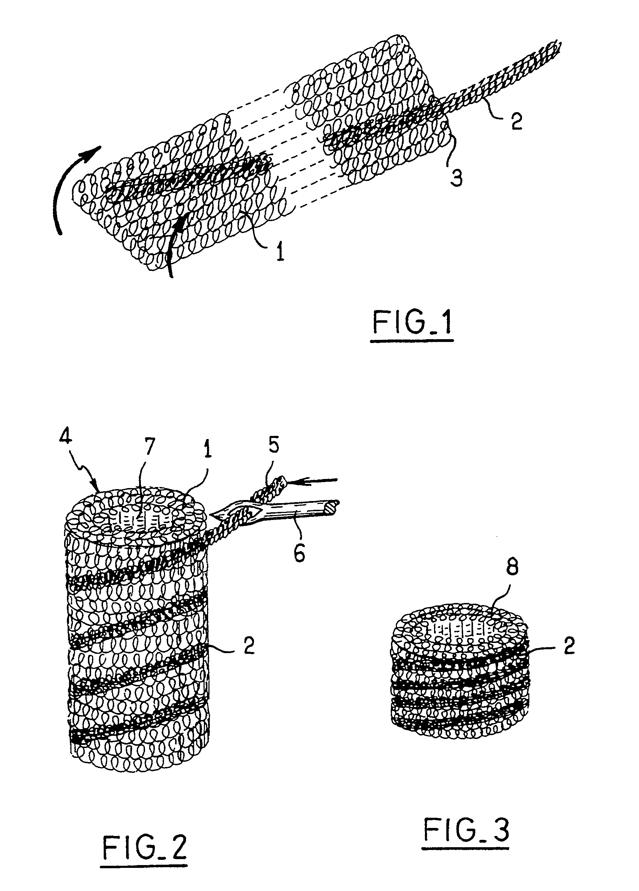

Selon une mise en oeuvre préférée du procédé selon l'invention, on réalise parallèlement une bande de maintien 2 par aplatissement d'un tricot tubulaire obtenu à partir d'un fil d'acier de 0,1 mm de diamètre ayant une ténacité de 80kg/mm$^2$. Une extrémité de la bande de maintien 2 est déposée sur la bande de tricot de fil métallique 1 avant enroulement de celle-ci, de préférence de façon que la bande de maintien 2 passe au voisinage d'un coin 3 de la bande de tricot de fil d'acier 1. La bande de tricot de fil d'acier 1 est ensuite enroulée sur elle-même comme indiqué par les flèches en traits gras sur la figure 1 de façon que la bande de maintien 2 soit tournée du côté intérieur des tours de la bande de tricot de fil d'acier auxquels elle est associée.

Après enroulement de la bande de tricot de fil d'acier 1 selon une préforme cylindrique généralement désignée en 4 sur la figure 2, la portion de bande de maintien 2 qui s'étend au-delà de l'extrémité de la bande de tricot de fil d'acier 1, est enroulée en hélice autour de la préforme 4. L'extrémité libre 5 de la bande de maintien 2 est ensuite engagée dans l'oeil d'un poinçon 6 qui est manoeuvré radialement comme indiqué par la flèche sur la figure 2, afin de fixer l'extrémité de la bande de maintien 2 dans la préforme cylindrique 4. Il n'est pas nécessaire qu'une longueur finie de bande de maintien soit découpée avant la mise en place de la bande de maintien. En effet, si la bande de maintien 2 se prolonge au delà du poinçon 6, la bande de maintien 2 est introduite radialement par le poinçon 6 selon une double épaisseur et on prévoit dans ce cas d'introduire le poinçon 6 jusqu'à l'intérieur du canal central 7 de la préforme 4 et de couper dans cette position la bande de maintien 2 au ras du poinçon 6 afin que le retrait du poinçon 6 se fasse sans entraîner l'extrémité de la bande de maintien 2 qui a été introduite radialement.

Après compression axiale de la préforme 4, on obtient le manchon élastique représenté sur la figure 3 qui comporte une masse de fil d'acier comprimé 8 entourée d'une hélice de bande de maintien en fil métallique dont les extrémités sont fixées à la masse de fil d'acier comprimé.

Bien entendu l'invention n'est pas limitée au mode de réalisation décrit et l'on peut y apporter des variantes de réalisation sans sortir du cadre de l'invention. En particulier, bien que la bande de maintien 2 ait été décrite en liaison avec un mode de réalisation dans lequel cette bande de maintien est formé par un tricot tubulaire aplati, on peut utiliser une bande de maintien tricotée à plat ou encore réalisée à partir de fil métallique tissé ou tressé. De même, bien que dans le mode de réalisation décrit une des extrémités de la bande de maintien soit fixée par poinçonnage tandis que l'autre extrémité est maintenue par pincement entre les tours de la bande de tricot de fil d'acier formant la préforme, les deux extrémités de la bande de maintien peuvent être fixées de la même façon, par poinçonnage, voire même par agrafage, le nombre limité d'agrafes nécessaires à la fixation de la bande de maintien 2 n'étant pas préjudiciable au bon fonctionnement du manchon élastique obtenu.

On remarquera également sur la figure 2 que dans le mode de réalisation préféré décrit, la bande de maintien 2 a une largeur sensiblement plus faible que la bande de tricot de fil d'acier 1. Par exemple, pour une bande de tricot de fil d'acier 1 ayant une largeur d'environ 65 mm, on a avantageusement utilisé une bande de maintien 2 ayant une largeur d'environ 5 mm permettant de faire plusieurs tours avec la bande de maintien sans que les spires de la bande de maintien soient jointives même après compression axiale. A ce propos on remarquera d'ailleurs qu'en raison de l'enroulement hélicoïdal de la bande de maintien 2, les propriétés élastiques du manchon obtenu ne sont pas sensiblement modifiées même si les tours de la bande de maintien se touchent ou se chevauchent. Toutefois, pour des raisons évidentes de coût on cherchera à minimiser le nombre de tours de la bande de maintien, tout en assurant une cohésion suffisante du manchon élastique.

Bien que dans le mode de réalisation illustré la bande de maintien 2 s'étend sur toute la longueur de la bande de tricot de fil d'acier 1, on peut prévoir de disposer la bande de maintien 2 sur une partie seulement de la longueur de la bande de tricot de fil d'acier 1 lorsque l'effet de pincement s'avère suffisant pour retenir cette extrémité de la bande de maintien 2.

Bien que dans le mode de réalisation décrit la bande de maintien 2 ait été réalisée à partir d'un fil d'acier ayant une tenacité sensiblement inférieure à la tenacité du fil d'acier formant la bande de tricot de fil d'acier 1, on peut également prévoir d'utiliser un fil d'acier ayant une tenacité plus proche de celle de la bande de tricot de fil d'acier 1 ou, au contraire, un fil métallique différent en fonction de la force de cohésion qu'il est nécessaire d'appliquer sur la préforme 1 pour maintenir celle-ci enroulée par une traction appropriée sur la bande de maintien 2.

On notera qu'il est important que la bande de maintien 2 ne soit pas réduite à un simple fil enroulé en hélice car la traction qui est nécessaire pour maintenir la cohésion de la préforme aurait tendance soit à créer sur la préforme une contrainte locale, nuisible à l'obtention d'un manchon élastique ayant une surface extérieure régulière, soit, dans le cas d'une traction faible, à provoquer un risque de glissement du fil lors de la compression axiale.

## Revendications

1. Manchon élastique anti-vibratoire comportant une masse de fil d'acier comprimé (8) caractérisé en ce qu'il comporte une bande de maintien (2) en fil métallique enroulé en hélice autour de la masse de fil d'acier comprimé (8), et dont les extrémités sont fixées à la masse de fil d'acier comprimé (8).

2. Manchon élastique selon la revendication 1 caractérisé en ce que la bande de maintien (2) est une bande de tricot de fil d'acier.

3. Manchon élastique selon la reventication 2 caractérisé en ce que la bande de maintien (2) est une portion d'un tricot tubulaire aplati.

4. Procédé de réalisation d'un manchon élastique anti-vibratoire comportant les étapes d'enrouler une bande de tricot de fil d'acier (1) pour former une préforme cylindrique (4) et de comprimer axialement la préforme cylindrique (4) pour former une masse de fil d'acier comprimé (8), caractérisé en ce qu'il comporte l'étape d'enrouler en hélice autour de la préforme cylindrique une bande de maintien (2) en fil métallique, et de fixer les extrémités de la bande de maintien à la préforme cylindrique.

5. Procédé selon la revendication 4 caractérisé en ce qu'au moins une extrémité de la bande de maintien (2) est fixée à la préforme (4) par poinçonnage radial de l'extrémité de la bande de maintien (2) dans la préforme cylindrique (4).

6. Procédé selon la revendication 4 ou la revendication 5 caractérisé en ce qu'une extrémité de la bande de maintien (2) est fixée à la préforme (4) en déposant une extrémité de la bande de maintien (2) sur la bande de tricot de fil d'acier (1) avant enroulement de celle-ci, et enroulement simultané de la bande de maintien (2) et de la bande de tricot de fil d'acier (1) de façon que la bande de maintien (2) soit tournée du côté intérieur des tours de la bande de tricot de fil d'acier auxquels elle est associée.

FIG_1

FIG_2

FIG_3

EP 0 447 294 A1

Office européen
des brevets

**RAPPORT DE RECHERCHE EUROPEENNE**

Numero de la demande

EP 91 40 0599

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-337854 (DUBOIS)<br>* colonne 3, ligne 65 - colonne 4, ligne 22; figures 3, 5 *<br>--- | 1, 2 | F16F1/36<br>F16L55/033<br>F01N7/18 |
| A | FR-A-1203267 (METAL TEXTILE CORP)<br>* le document en entier *<br>--- | 1-4 | |
| A | GB-A-1176791 (DELANEY GALLAY)<br>* page 2, lignes 65 - 129 *<br>* page 3, lignes 43 - 66 *<br>* figures 1, 3 *<br>--- | 1, 2 | |
| A | FR-A-1063211 (ROBINSON)<br>* figures 2, 3, 8-14 **résumé*<br>--- | 1, 4 | |
| A | GB-A-199966 (YEOMANS)<br>* le document en entier *<br>--- | 1 | |
| A | GB-A-778513 (BARRY CONTROLS)<br>----- | | |

|  | DOMAINES TECHNIQUES RECHERCHES (Int. Cl.5) |
|---|---|
| | F16F<br>F01N<br>F16L |

Le présent rapport a été établi pour toutes les revendications

| Lieu de la recherche | Date d'achèvement de la recherche | Examinateur |
|---|---|---|
| LA HAYE | 07 MAI 1991 | ESPEEL R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................
& : membre de la même famille, document correspondant

EPO FORM 1503 03.82 (P0402)

6